# EUROPÄISCHE PATENTANMELDUNG

(11) **EP 0 953 495 A2**
(43) Veröffentlichungstag der Anmeldung: **03.11.1999**
(21) Anmeldenummer: 99104030.4
(22) Anmeldetag: 15.03.1999
(51) Int. Cl.: B62D 25/04

(54) **Karosseriesäule bzw. Verfahren zur Herstellung einer Karosseriesäule für eine Fahrzeugkarosserie**

(30) Priorität: 30.04.1998 DE 19819484
(71) Anmelder: Volkswagen Aktiengesellschaft, 38436 Wolfsburg (DE)
(72) Erfinder: Oehlerking, Conrad, Dipl.-Ing., 38527 Meine (DE); Welsch, Frank, Dr., 38179 Schwülper (DE)

(57) **Zusammenfassung**

Die Erfindung betrifft ein Verfahren zur Herstellung einer Karosseriesäule (1) für eine Fahrzeugkarosserie bzw. eine Karosseriesäule (1) wobei die Karosseriesäule (1) ein bestimmte Form aufweist, aus einer Metallplatine (2) mit Hilfe eines Umformverfahrens hergestellt ist und aufgrund ihrer spezifischen Form unterschiedliche Bereiche, nämlich mindestens einen ersten Bereich (3) und mindestens einen - im Vergleich zum ersten Bereich (3) - unterschiedlich verformten zweiten Bereich (4) aufweist.

Die Karosseriesäule (1), insbesondere B- oder C-Säule, ist unter ökologischen, ökonomischen und Sicherheits-Aspekten dadurch verbessert, daß zur Erhöhung der Steifigkeit bzw. Festigkeit der Karosseriesäule (1) ein vor Realisierung des Umformvorgangs im wesentlichen direkt auf dem ersten Bereich (3) angeordnetes Verstärkungsblech (5) vorgesehen ist .

## Beschreibung

Die Erfindung betrifft zunächst ein Verfahren zur Herstellung einer Karosseriesäule für eine Fahrzeugkarosserie nach dem Oberbegriff des Patentanspruchs 1. Weiterhin betrifft die Erfindung eine Karosseriesäule für eine Fahrzeugkarosserie, insbesondere eine B- oder C-Säule, wobei die Karosseriesäule eine bestimmte Form aufweist, aus einer Metallplatine mit Hilfe eines Umformverfahrens hergestellt ist und - aufgrund ihrer spezifischen Form - unterschiedliche Bereiche, nämlich mindestens einen ersten Bereich und mindestens einen - im Vergleich zum ersten Bereich - unterschiedlich verformten zweiten Bereich aufweist.

Im Stand der Technik, von dem die Erfindung ausgeht, werden die Karosseriesäulen, insbesondere für das Dach einer Fahrzeugkarosserie oder für den 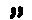 Überrollbügel" bei Cabriolets, im allgemeinen aus einer Metallplatine hergestellt, wobei die Metallplatine zu der die Karosseriesäule im Endzustand aufweisenden spezifischen Form umgeformt wird. Je nachdem, ob nun eine B- oder C-Säule als Karosseriesäule hergestellt wird, weist die jeweilige spezifische Form der entsprechenden hergestellten Karosseriesäule unterschiedlich verformte Bereiche auf, die durch eine bestimmte Krafteinwirkung, die insbesondere bei einem Fahrzeug-Crash hervorgerufen werden kann, auch unterschiedlich stark deformiert werden können. So weist die jeweilige Karosseriesäule mindestens einen ersten Bereich und mindestens einen - im Vergleich zum ersten Bereich - unterschiedlich verformten zweiten Bereich auf. Nun hat die Praxis gezeigt, daß in Abhängigkeit der spezifischen Form und des verwendeten spezifischen Materials der jeweiligen Karosseriesäule es Bereiche der Karosseriesäule gibt, die bei bestimmten Krafteinwirkungen anders bzw. stärker deformiert werden als andere Bereiche.

So ist es beispielsweise von großer Bedeutung, daß die für das Dach der Fahrzeugkarosserie verwendeten Karosseriesäulen, die B- oder C-Säulen, in ihrer Längsrichtung gesehen eine bestimmte Steifigkeit bzw. Festigkeit aufweisen, um bei einem entsprechenden Fahrzeug-Crash bei einem Überschlag des Fahrzeugs einem Eindrücken oder Einknicken des Daches der Fahrzeugkarosserie nach unten, also in Richtung des Innenraums, möglichst entgegenzuwirken. Insbesondere die B-Säule muß aber nicht nur in ihrer Längsrichtung, sondern auch in Querrichtung die notwendige Festigkeit bzw. Steifigkeit aufweisen, um bei einem Seitencrash einen entsprechenden seitlichen Widerstand bzw. Schutz zu gewährleisten. Folglich kommt der Ausbildung der Karosseriesäulen, nämlich der B- oder C-Säulen, aus für die Fahrzeuginsassen notwendigen Sicherheitsanforderungen eine besondere Bedeutung zu.

Nun hat die in den letzten Jahren in der Kraftfahrzeugindustrie zu erkennende und realisierte Entwicklung gezeigt, daß aus ökonomischen und ökologischen Gründen versucht wird, das Gesamtgewicht des Kraftfahrzeugs und somit auch das Gesamtgewicht einer Fahrzeugkarosserie möglichst zu minimieren, um die hieraus resultierenden Vorteile wie Minimierung des Kraftstoffverbrauchs und eine längere Lebensdauer der aufgrund eines verringerten Gewichts langsamer verschleißenden Bauteile sich zunutze machen zu können. Aufgrund dieser Bestrebungen der Kraftfahrzeugindustrie hat man in letzter Zeit neue Techniken und neue Materialien eingesetzt, um insbesondere die angestrebte Gewichtsreduzierung des Kraftfahrzeugs zu realisieren.

Aus sicherheitstechnischen Gründen hat die oben beschriebene Entwicklung aber insbesondere die tragenden Bauteile einer Fahrzeugkarosserie, wie die Karosseriesäule, nämlich insbesondere die B- oder C-Säule außer acht gelassen, da die Sicherheit der Fahrzeuginsassen immer gewährleistet sein muß und die bisher entwickelten bzw. verwendeten Techniken zur Gewichtsverringerung für derartige Bauteile bisher nicht geeignet bzw. problematisch erschienen.

Der Erfindung liegt daher die Aufgabe zugrunde, ein Verfahren zur Herstellung einer Karosseriesäule der eingangs genannten Art bzw. eine Karosseriesäule selbst anzugeben, wobei die Karosseriesäule leicht herstellbar sein soll bzw. so ausgebildet sein soll, daß die Sicherheit der Fahrzeuginsassen gewährleistet ist und die Karosseriesäule auch den heutigen ökonomischen und ökologischen Anforderungen entspricht.

Die zuvor aufgezeigte Aufgabe ist bei dem Verfahren durch die Merkmale des Patentanspruchs 1 gelöst. Die Karosseriesäule gemäß dem Patentanspruch 14 selbst löst die zuvor aufgezeigte Aufgabe dadurch, daß zur Erhöhung der Steifigkeit bzw. Festigkeit der Karosseriesäule ein vor Realisierung des Umformvorgangs im wesentlichen direkt auf dem ersten Bereich angeordnetes Verstärkungsblech vorgesehen ist.

Dadurch, daß vor Realisierung des Umformvorgangs auf dem ersten Bereich der Karosseriesäule bzw. auf den entsprechenden ersten Bereichen ein entsprechendes Verstärkungsblech vorgesehen ist, wird die Steifigkeit bzw. Festigkeit der Karosseriesäule, d.h. z.B. der B- und C-Säule hier entsprechend erhöht. Der erste Bereich stellt hier den, insbesondere bei einem Fahrzeug-Crash, besonders gefährdeten, d.h. den im Stand der Technik nach einem Crash besonders stark deformierten Bereich dar. Hierdurch ist eine Karosseriesäule ausgebildet, die insbesondere an den bei einem Fahrzeug-Crash besonders gefährdeten, d.h. deformierbaren - ersten - Bereichen entsprechend verstärkt ist und hier eine ausreichende Steifigkeit bzw. Festigkeit aufweist. Dennoch sind die ökonomischen und ökologischen Vorteile einer so ausgebildeten Karosseriesäule ersichtlich, da sie eben nur in den notwendigen - ersten - Bereichen entsprechende Verstärkungen aufweist, so daß das Gesamtgewicht einer derartigen Karosseriesäule, d.h. insbesondere der B- oder C-Säule nicht übermäßig groß ist und das Gesamtgewicht des entsprechenden Fahrzeugs optimiert wird. Bei dem Verfahren zur Herstellung der erfindungsgemäßen Karosseriesäule wird auf den ersten Bereich der noch ungeformten Metallplatine, wobei hier dieser erste Bereich im späteren umgeformten Zustand aufgrund der hergestellten spezifischen Form der Karosseriesäule den oben erwähnten gefährdeten Bereich bildet, zur Erhöhung der Steifigkeit bzw. der Festigkeit der im Endzustand hergestellten Karosseriesäule - vor Realisierung des Umformvorgangs - ein Verstärkungsblech angeordnet, das während des Umformvorgangs gemeinsam mit der Metallplatine zu der spezifischen Form der Karosseriesäule umgeformt wird.

Der erste Bereich der Metallplatine und das im wesentlichen direkt auf dem ersten Bereich angeordnete Verstärkungsblech können auch unterschiedliche Materialdicken aufweisen und/oder aus unterschiedlichen Materialien bestehen, z. B. aus unterschiedlichen Stahlsorten (z. B. konventionellem Stahl einerseits und hochfestem Stahl andererseits) oder auch aus Leichtmetall (Aluminium, Magnesium, deren Legierungen usw.) einerseits und Stahl andererseits.

Es gibt nun eine Vielzahl von Möglichkeiten, das erfindungsgemäße Verfahren zur Herstellung einer Karosseriesäule, d.h. z.B. einer B- oder C-Säule, bzw. die Karosseriesäule selbst in vorteilhafter Weise auszugestalten und weiterzubilden. Hierfür darf an dieser Stelle auf die den Patentansprüchen 1 und 14 nachgeordneten Patentansprüche verwiesen werden.

Im übrigen wird nun eine Ausführungsform der Erfindung anhand einer Zeichnung näher erläutert. In der Zeichnung zeigt
- Fig. 1: den ersten Verfahrensschritt eines erfindungsgemäßen Verfahrens zur Herstellung einer erfindungsgemäßen Karosseriesäule,
- Fig. 2: eine erfindungsgemäße Karosseriesäule, nämlich eine B-Säule, in einer schematischen Darstellung von der Seite und
- Fig. 3: eine in einer Fahrzeugkarosserie vorgesehene, als B-Säule ausgeführte Karosseriesäule.

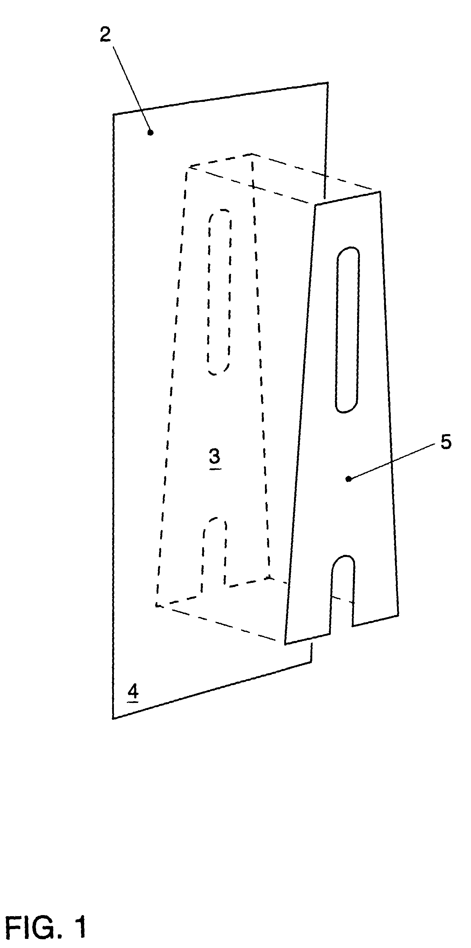

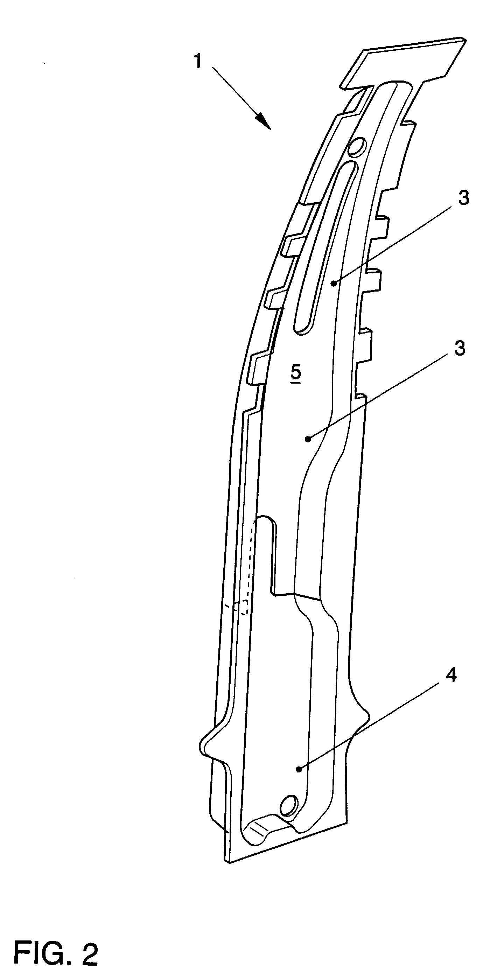

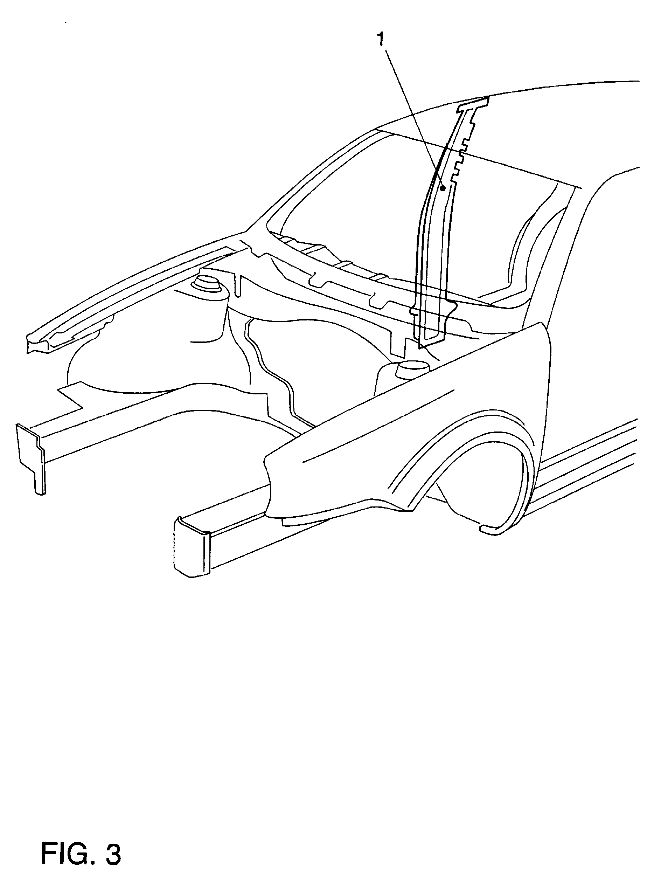

Fig. 1 zeigt den ersten Verfahrensschritt zur Herstellung einer Karosseriesäule 1 für eine nicht näher bezeichnete Fahrzeugkarosserie, insbesondere zur Herstellung einer B- oder C-Säule, wobei hier die Herstellung einer B-Säule bzw. die als B-Säule ausgebildete Karosseriesäule 1 selbst in Fig. 2 dargestellt ist und Fig. 3 die als B-Säule ausgeführte Karosseriesäule 1 in einem in der Fahrzeugkarosserie eingebauten Zustand zeigt (wobei in Fig. 3 zur Verdeutlichung der Einbausituation auch an sich durch die übrigen Teile der Fahrzeugkarosserie verdeckte Bereiche der B-Säule 1 dargestellt sind).

Bei dem in Fig. 1 angedeuteten Verfahren wird eine Metallplatine 2 zu der die Karosseriesäule 1 im Endzustand aufweisenden spezifischen Form umgeformt. Die noch ungeformte Metallplatine 2 weist einen ersten Bereich 3 und einen zweiten Bereich 4 auf, wobei hier der erste Bereich 3 - im späteren umgeformten Zustand - aufgrund der hergestellten spezifischen Form der Karosseriesäule 1 den bei einem Fahrzeug-Crash besonders gefährdeten Bereich darstellt.

Fig. 2 zeigt die entsprechend hergestellte Karosseriesäule 1, die eine bestimmte Form aufweist und mit Hilfe eines Umformverfahrens (z.B. eines Tiefziehvorgangs) aus der in Fig. 1 ersichtlichen Metallplatine 2 hergestellt ist. Aufgrund ihrer spezifischen Form weist die Karosseriesäule 1 unterschiedliche Bereiche 3, 4 auf, die aufgrund dieser Form unterschiedliche Steifigkeiten bzw. Festigkeiten besitzen.

Fig. 1 zeigt, daß zur Erhöhung der Steifigkeit bzw. der Festigkeit der im Endzustand hergestellten, in Fig. 2 gezeigten Karosseriesäule 1 im wesentlichen direkt auf dem ersten Bereich 3 der ungeformten Metallplatine 1 vor Realisierung des Umformvorgangs ein Verstärkungsblech 5 angeordnet wird. Fig. 2 zeigt die hergestellte Karosseriesäule 1 und es ist gut zu erkennen, daß zur Erhöhung der Steifigkeit bzw. Festigkeit der Karosseriesäule 1 das im wesentlichen direkt auf dem ersten Bereich 3 angeordnete Verstärkungsblech 5 vorgesehen ist, das in Fig. 1 noch ungeformt abgebildet ist. Die hier beschriebene Technik wird auch als 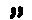 Patchwork-Technik" bezeichnet.

Bei der Herstellung der Karosseriesäulen 1 treten entsprechende Belastungen auf. Hierbei wird unter anderem der erste Bereich 3 der Karosseriesäule 1 entsprechend umgeformt, da die Karosseriesäule 1 im wesentlichen U-förmig ausgebildet wird. Da sich bei diesem Umformvorgang auch der erste Bereich 3 entsprechend verformt, wird bei diesem Umformvorgang das Verstärkungsblech 5 korrespondierend zu der Form des ersten Bereichs 3 ausgebildet, da die Metallplatine 2 und das Verstärkungsblech 5 in einem gemeinsamen Umformvorgang verformt werden.

Damit eine entsprechende gemeinsame Umformung des Verstärkungsblechs 5 mit dem ersten Bereich 3 realisiert werden kann, wird das Verstärkungsblech 5 mit dem ersten Bereich 3 vor dem Umformvorgang vorzugsweise über punktuell ausgebildete Schweißverbindungen verbunden. Es ist auch denkbar, daß das Verstärkungsblech 5 mit dem ersten Bereich 3 vor dem Umformvorgang zumindest über punktuell ausgebildete Klebeverbindungen verbunden wird, wobei vorzugsweise die Klebeverbindungen durch einen auf Epoxidharz basierenden Klebstoff realisiert werden.

Die Karosseriesäule 1 wird durch den Umformvorgang, nämlich insbesondere einen Tiefziehvorgang, hergestellt, wobei der Umformvorgang so ausgeführt wird, daß auf die zwischen der Metallplatine 2 und dem Verstärkungsblech 5 existierenden nicht näher bezeichneten Verbindungsstellen möglichst geringe Kräfte wirken.

Die vor dem Umformvorgang realisierte Fügetechnik der 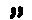 Patches" 5 ist insbesondere abhängig von der Art des verwendeten Materials für die Metallplatine 2 einerseits und die 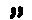 Patches" 5 andererseits, sowie von der Art der Umformung beim Tiefziehen und der daraus resultierenden Belastung der Fügestellen, die abhängig ist vom Umformgrad und vom jeweiligen Dickensprung am Rand der 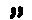 Patches" 5.

Als besonders günstig und belastungsarm für die Fügetechnik hat sich eine Crash-Verstärkung der B-Säule in ihrem inneren Bereich erwiesen, wobei das Verstärkungsblech 5 so auf die Metallplatine 2 gepunktet und/oder geklebt wird, daß sich das Verstärkungsblech 5 und die hieraus resultierende 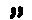 Verstärkung" nach dem Umformen im inneren Bereich der U-förmig ausgebildeten Karosseriesäule 1 befindet (siehe Fig. 2). Weil hier bei der Umformung im wesentlichen nur eine Biegung auftritt, werden auf die Fügestellen (Verbindungsstellen) nur geringe Kräfte beim Tiefziehen aufgebracht, so daß auch 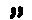 Patches" bzw. Verstärkungsbleche 5, die mit der Metallplatine 2 verklebt sind und bei denen der Kleber noch nicht bzw. noch nicht vollständig ausgehärtet ist, während des Umformens an der gewünschten Position bleiben. Vorzugsweise kann der Kleber durch den beim später folgenden KTL-Lackiervorgang auftretenden Erwärmungsprozeß vollständig aushärten.

Vorzugsweise wird das Verstärkungsblech 5 aber durch nicht dargestellte Schweißverbindungen mit der Metallplatine 2 verbunden. Hierzu eignet sich insbesondere das Widerstandspunkt-Schweißverfahren bzw. Laser-Schweißverfahren oder auch das Elektronenstrahl-Schweißverfahren.

## Patentansprüche

1. Verfahren zur Herstellung einer Karosseriesäule (1) für eine Fahrzeugkarosserie, insbesondere zur Herstellung einer B- oder C-Säule, wobei eine Metallplatine (2) zu der die Karosseriesäule (1) im Endzustand aufweisenden spezifischen Form umgeformt wird und wobei die noch ungeformte Metallplatine (2) mindestens einen ersten Bereich (3) und einen zweiten Bereich (4) aufweist, wobei der erste Bereich (3) - im späteren umgeformten Zustand - aufgrund der hergestellten spezifischen Form im Vergleich zum zweiten Bereich (4) unterschiedlich verformt ist, **dadurch gekennzeichnet**, daß zur Erhöhung der Steifigkeit bzw. Festigkeit der im Endzustand hergestellten Karosseriesäule (1) im wesentlichen direkt auf dem ersten Bereich (3) der ungeformten Metallplatine (2) vor Realisierung des Umformvorganges ein Verstärkungsblech (5) angeordnet wird.

2. Verfahren nach dem vorhergehenden Anspruch, **dadurch gekennzeichnet**, daß die Karosseriesäule (1) im wesentlichen U-förmig ausgebildet wird.

3. Verfahren nach einem der vorhergehenden Ansprüche, **dadurch gekennzeichnet**, daß der Umformvorgang so ausgeführt wird, daß der obere Teil der hergestellten Karosseriesäule (1) im wesentlichen aus dem ersten Bereich (3) gebildet ist.

4. Verfahren nach einem der vorhergehenden Ansprüche, **dadurch gekennzeichnet**, daß der Umformvorgang so ausgeführt wird, daß der erste Bereich (3) eine Krümmung aufweist.

5. Verfahren nach einem der vorhergehenden Ansprüche, **dadurch gekennzeichnet**, daß der Umformvorgang so ausgeführt wird, daß der erste Bereich (3) eine im Vergleich zum zweiten Bereich (4) geringere Breite aufweist.

6. Verfahren nach einem der vorhergehenden Ansprüche, **dadurch gekennzeichnet**, daß das Verstärkungsblech (5) zumindest im wesentlichen korrespondierend zu der Form des ersten Bereichs (3) ausgebildet wird.

7. Verfahren nach einem der vorhergehenden Ansprüche, **dadurch gekennzeichnet**, daß die Metallplatine (2) und das Verstärkungsblech (5) vor dem Umformvorgang zumindest punktuell miteinander verbunden werden.

8. Verfahren nach einem der vorhergehenden Ansprüche, **dadurch gekennzeichnet**, daß das Verstärkungsblech (5) mit dem ersten Bereich (3) vor dem Umformvorgang zumindest über punktuell ausgebildete Schweißverbindungen verbunden wird.

9. Verfahren nach einem der vorhergehenden Ansprüche, **dadurch gekennzeichnet**, daß das Verstärkungsblech (5) mit dem ersten Bereich (3) vor dem Umformvorgang zumindest über punktuell ausgebildete Klebeverbindungen verbunden wird.

10. Verfahren nach einem der vorhergehenden Ansprüche, **dadurch gekennzeichnet**, daß die Klebeverbindung durch einen auf Epoxidharz basierenden Klebstoff realisiert wird.

11. Verfahren nach einem der vorhergehenden Ansprüche, **dadurch gekennzeichnet**, daß die Schweißverbindungen mit Hilfe des Widerstandspunkt-Schweißverfahrens, eines Laser-Schweißverfahrens und/oder eines Elektronenstrahl-Schweißverfahrens realisiert werden.

12. Verfahren nach einem der vorhergehenden Ansprüche, **dadurch gekennzeichnet**, daß die Karosseriesäule (1) durch einen Tiefziehvorgang hergestellt wird.

13. Verfahren nach einem der vorhergehenden Ansprüche, **dadurch gekennzeichnet**, daß der Umformvorgang so ausgeführt wird, daß auf die zwischen der Metallplatine (2) und dem Verstärkungsblech (5) existierenden Verbindungsstellen nur geringe Kräfte wirken.

14. Karosseriesäule für eine Fahrzeugkarosserie, insbesondere B- oder C-Säule, vorzugsweise hergestellt nach einem der Ansprüche 1 bis 13, wobei die Karosseriesäule (1) eine bestimmte Form aufweist, aus einer Metallplatine (2) mit Hilfe eines Umformverfahrens hergestellt ist und - aufgrund ihrer spezifischen Form - unterschiedliche Bereiche (3, 4), nämlich mindestens einen ersten Bereich (3) und mindestens einen - im Vergleich zum ersten Bereich (3) - unterschiedlich verformten zweiten Bereich (4) aufweist, **dadurch gekennzeichnet**, daß zur Erhöhung der Steifigkeit bzw. Festigkeit der Karosseriesäule (1) ein vor Realisierung des Umformvorgangs im wesentlichen direkt auf dem ersten Bereich (3) angeordnetes Verstärkungsblech (5) vorgesehen ist.

15. Karosseriesäule nach dem vorhergehenden Anspruch, **dadurch gekennzeichnet**, daß die Karosseriesäule (1) im wesentlichen U-förmig ausgebildet ist.

16. Karosseriesäule nach Anspruch 14 oder 15, **dadurch gekennzeichnet**, daß der obere Teil der hergestellten Karosseriesäule (1) im wesentlichen aus dem ersten Bereich (3) gebildet ist.

17. Karosseriesäule nach einem der Ansprüche 14 bis 16, **dadurch gekennzeichnet**, daß der erste Bereich (3) eine Krümmung aufweist.

18. Karosseriesäule nach einem der Ansprüche 14 bis 17, **dadurch gekennzeichnet**, daß der erste Bereich (3) eine im Vergleich zum zweiten Bereich (4) geringere Breite aufweist.

19. Karosseriesäule nach Anspruch 14 bis 18, **dadurch gekennzeichnet**, daß das Verstärkungsblech (5) zumindest im wesentlichen korrespondierend zu der Form des ersten Bereichs (3) ausgebildet ist.

20. Karosseriesäule nach einem der Ansprüche 14 bis 19, **dadurch gekennzeichnet**, daß das Verstärkungsblech (5) mit dem ersten Bereich (3) zumindest über punktuell ausgebildete Schweißverbindungen verbunden ist.

21. Karosseriesäule nach einem der Ansprüche 14 bis 20, **dadurch gekennzeichnet**, daß die Schweißverbindungen mit Hilfe des Widerstandspunkt-Schweißverfahrens, eines Laser-Schweißverfahrens und/oder eines Elektronenstrahl-Schweißverfahrens realisiert sind.

22. Karosseriesäule nach einem der Ansprüche 14 bis 21, **dadurch gekennzeichnet**, daß das Verstärkungsblech (5) mit dem ersten Bereich (3) zumindest über punktuell ausgebildete Klebeverbindungen verbunden ist.

23. Karosseriesäule nach einem der Ansprüche 14 bis 22, **dadurch gekennzeichne**t, daß die Klebeverbindung durch einen auf Epoxidharz basierenden Klebstoff realisiert ist.

24. Karosseriesäule nach einem der Ansprüche 14 bis 23, **dadurch gekennzeichnet**, daß die Karosseriesäule (1) durch einen Tiefziehvorgang hergestellt ist.

25. Karosseriesäule nach einem der Ansprüche 14 bis 24, **dadurch gekennzeichnet**, daß das Verstärkungsblech (5) im inneren Bereich der U-förmig ausgebildeten Karosseriesäule (1) angeordnet ist.
